# EUROPEAN PATENT APPLICATION

(11) **EP 0 549 118 A2**
(43) Date of publication of application: **30.06.1993**
(21) Application number: 92310243.8
(22) Date of filing: 09.11.1992
(51) Int. Cl.: C03B 9/16, C03B 9/40

(54) **Moving mechanism for use in a glassware forming machine**

(30) Priority: 20.12.1991 GB 9127082
(71) Applicant: Emhart Glass Machinery Investments Inc., Wilmington, Delaware 19801 (US)
(72) Inventor: Sidler, Werner, CH-8133 Esslingen (CH)
(74) Representative: Randall, John Walter

(57) **Abstract**

A moving mechanism is described for imparting a movement which has a rotary component about a vertical axis and a linear component in a vertical direction to an operative member (which, for example may support a funnel or a baffle) in a glassware forming machine. The mechanism comprises a piston having a shaft which is provided with planar and skewed cam surfaces and is forced through a collar to obtain the required movements. The collar comprises cam rolls which contact the cam surfaces and may be adjusted to reduce the amount of backlash and play in the mechanism.

## Description

This invention is concerned with moving mechanisms for use in a glassware forming machine for moving an operative member such as a blowhead, funnel or a baffle.

In a glassware forming machine of the so-called 'individual section' type, the need arises to move certain operative members between out of the way positions and operative positions in which the operative member is aligned with an opening of a mould cavity of the machine. For example the machine comprises a blank mould in which parisons are formed and it is necessary to move a funnel into alignment with the mould opening so that it can guide a gob of molten glass into the mould cavity and then into an out of the way position to allow a baffle to be positioned on the mould. The same situation arises with regard to the baffle in relation to the blank mould and with regard to a blowhead in relation to a blow mould in which the parisons formed in the blank mould are blown into containers by air supplied through the blowhead.

Conventional moving mechanism for moving such an operative member in an individual section type machine comprises a piston and cylinder assembly having a vertically extending piston rod which projects in both directions from a piston. One end portion of the piston rod carries a horizontally extending arm on which the operative member is mounted. The other end of the piston rod carries a cam roll which is engaged in a spiral cam track. The arrangement is such that, when the piston and cylinder assembly is operated, the piston rod moves vertically causing the operative member to move vertically. As this movement takes place the cam track causes the piston rod to turn about its longitudinal axis thereby swinging the arm and the operative member about this axis. The operative member is thus moved in a movement which has a rotary component about the longitudinal axis of the rod and a linear component in a vertical direction.

Moving mechanisms of the above type are shown for example in US 3,630,709, US 3,986,858 and US 4,120,683.

Available moving mechanisms of the above type suffers from certain disadvantages. It will be clear that it is important that the moving mechanism operates to position the operative member, whether it be a funnel, blowhead or baffle accurately with respect to the mould cavity when the operative member is in its operative position. Consequently it is desirable to ensure that any mis-positioning because of wear in the mechanism is minimized. Conventional moving mechanism of the type first described tend to suffer from wear problems giving rise to mispositioning or vibration of the operative member. These may arise because, particularly in certain parts of the movement, there is a high stress (and consequently a tendency to wear) between the spiral cam track and the cam roll which leads to wear particularly at such parts of movement. Further, the roll normally contacts one side of the cam track on movement in one direction and the other side on movement in the other direction, giving a tendency to a small uncontrolled movement at the beginning of each change of direction in the swinging movement.

It is one of the objects of the present invention to provide a mechanism of the above mentioned type which is substantially free from play and not readily subject to wear.

The present invention provides moving mechanism for use in a glassware forming machine for moving an operative member between an out-of-the-way position and an operative position in alignment with the opening of a mould cavity, the operative member making a movement which has a rotary component about a vertical axis and a linear component in a vertical direction and the moving mechanism comprising a shaft which extends vertically and on which a horizontally extending arm, on which the operative member is mounted, may be secured, a piston and cylinder assembly comprising a piston secured to the shaft and a vertically extending cylinder in which the piston is movable to impart a vertical component of movement to the shaft and thus to the operative member, and cam means for causing rotation of the shaft to provide a rotary component of movement to the operative member characterized in that
the cam means comprises a cam section formed on the shaft having a cross section having at least two opposed straight portions which provide opposed cam faces on the shaft comprising planar face portions, and skewed face portions, a collar assembly fixed relative to the cylinder comprising opposed cam rollers, one arranged to engage each of the opposed cam faces on the shaft at opposite sides of the shaft whereby on axial movement of the shaft to pass through the collar assembly, the shaft is forced to rotate as the skewed face portions pass the cam rollers and the shaft is constrained to move axially without rotation as the planar face portions pass the cam rollers.

Preferably in a moving mechanism according to the invention the cross section of the cam section comprises two parallel opposed straight portions and the collar assembly comprises two opposed sets of cam rollers. The opposed straight portions may be connected with circular portions which may fit closely into the collar assembly.

Alternatively in the moving mechanism the cross section of the cam section comprises four straight portions in opposed parallel pairs, notionally forming a rhombus, and the collar assembly comprises four sets of cam rollers, one set engaging the cam surface provided by each straight portion.

Preferably the cam rollers are mounted on eccentric members so that the distance between the axis of rotation of the rollers and the cam face can be adjusted.

There now follows a description, to be read with reference to the accompanying drawings, of two moving mechanisms chosen to illustrate the invention by way of example.

In the accompanying drawings
Figure 1 shows a first illustrative mechanism in vertical section with some parts broken away;
Figure 2 shows a section along the line II-II of Figure 1;
Figure 3 shows a perspective view of certain parts of the illustrative mechanism.
Figure 4 shows an alternative mechanism in a view corresponding to Figure 2.

The first illustrative moving mechanism is for use in a glassware forming machine for moving an operative member, e.g. a funnel, a baffle or a blowhead, between an out-of-the-way position and an operative position in alignment with the opening of a mould cavity, the operative member making a movement which has a rotary component about a vertical axis and a linear component in a vertical direction, the moving mechanism comprising a shaft 2 which extends vertically and on which a horizontally extending arm (not shown) on which the operative member is supported, may be secured.

The moving mechanism comprises a piston and cylinder assembly comprising a piston 4 secured to the shaft 2 and a vertically extending cylinder 6 in which the piston 4 is movable to impart a vertical component of movement to the shaft 2 and thus to the operative members.

The cylinder 6 comprises a cylindrical wall member 8 to which is secured an end cap 10. A guide block 12 is secured to the wall member 8 and an upper wall member 16 is secured to the block 12 by screws 14 (only one of which is shown) which clamp the members 8 and 16 and the guide block 12 together.

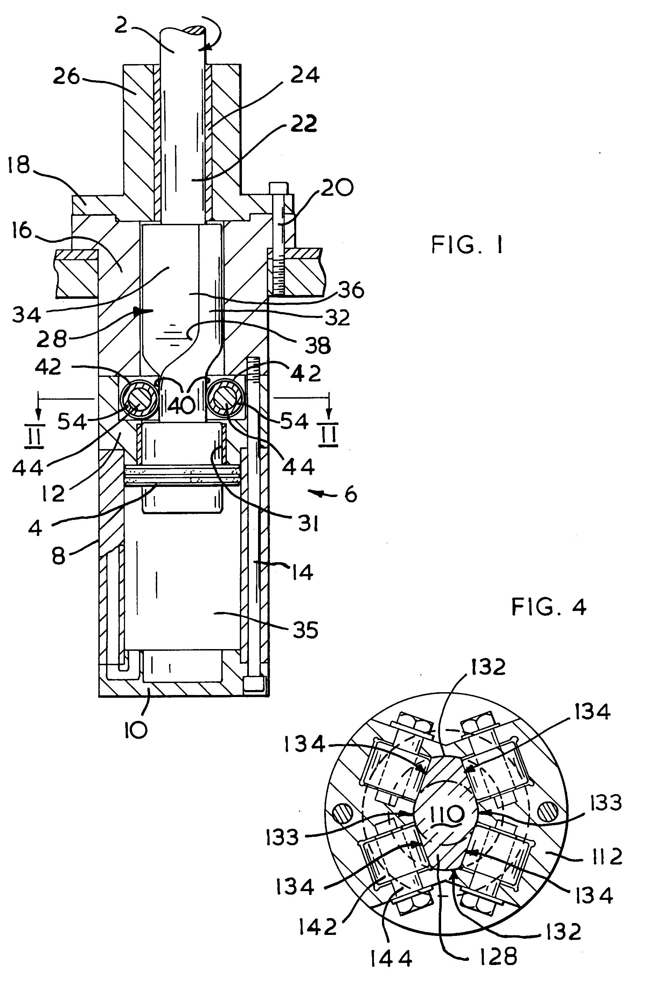

The piston 4 is secured to an upper cylindrical boss 30 which is part of the shaft 22 and which, in an uppermost position of the piston (see Figure 1) enters into a recess 31 in the guide block 12: also fixed to the piston is a lower boss 33 which in a lower most position of the piston fits into a recess 35 in the end cap 10. The two bosses 30,33 form part of means of conventional construction for cushioning the end parts of the up and down movement of the piston 4 and shaft 2.

An upper end cap 18 is secured to the upper wall member 16 by screws 20 (only one of which is shown).

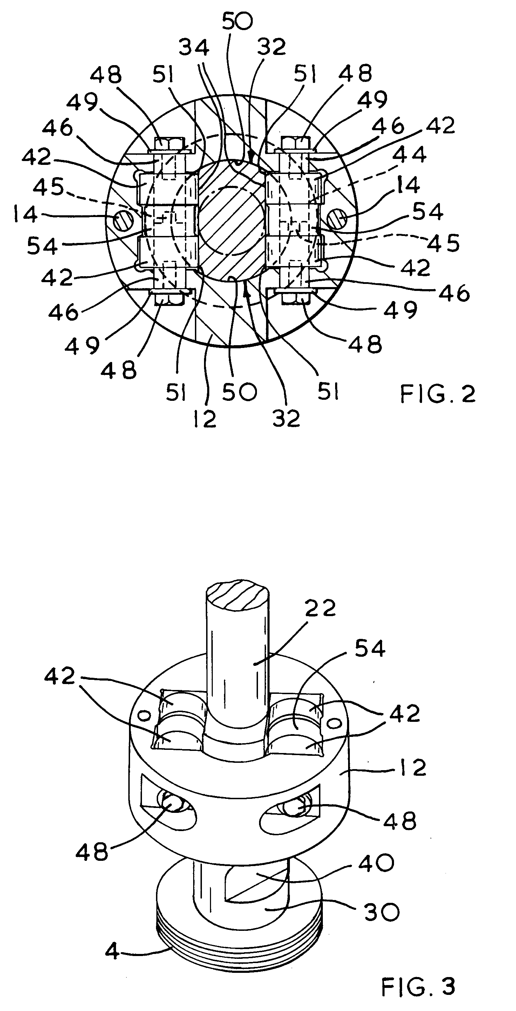

The mechanism comprises cam means for causing rotation of the shaft 2 to provide a rotary component of movement to the operative member. The shaft 10 comprises an upper cylindrical portion 22 which passes through a bearing sleeve 24 supported in an extension 26 of the upper end cap 18, a cam section 28, and the cylindrical boss 30 to which the piston 4 is fixed. The cam section 28 (as best seen in Figure 2) has a cross section defined by two circular portions 32, 32 and two opposed parallel straight portions 34,34 joined by the circular portions 32,32, and these provide two opposed cam faces on the shaft comprising planar face portions 36,36, skewed face portions 38,38, and subsidiary planar face portions 40,40 (see Figure 1), the face portions 38 and 40 being at an angle to each other. The skewed portions 38,38 are skewed through an angle of about 80° from end to end.

The guide block 12 provides a collar assembly which is fixed relative to the cylinder 6.

Two sets of opposed cam rollers 42 are provided in the collar assembly. Each roller 42 is mounted on an eccentric central portion of a pin 44 which has axially cylindrical portion 46 secured in the block 12 by bolts 48 and washers 49. One pin 44 of each set comprises an axial cylindrical protrusion 45 which seats in corresponding recess in the other pin of the set. Thus, by loosening a bolt 48 and rotating the pin 44 the position of the axis of each roller 42 may be independently adjusted.

The rollers 42 are arranged to engage each of the opposed cam faces of the cam section 28 as closely as possible, so that there is minimal play between the rollers 42 and the cam surfaces.

The guide block 12 also comprises curved guide surfaces 50 which closely surround the circular portions 32,32 of the surface of the cam section 28. The rollers 42 in engagement with each of the opposed cam faces of the cam section contact these faces at least substantially up to outer side portions 52 of these faces. The cam section 28 is thus effectively totally surrounded in the guide block 12 by the roller 42,42 and the curved surfaces 50, thus minimising the possibility of any radial play between the shaft and the guide block 12.

The rollers 42,42 are separated on the pins 46,46 by a narrow central sleeve 54.

In the operation of the mechanism, with the parts in the position shown in Figure 1, the operative member is in its out of the way position. On admission of compressed air above the piston 4 into the chamber formed by the upper wall member 16, through conventionally arranged passages (not shown) the piston 4 is forced downwardly. After a short axial movement of the shaft 2, allowed for by the subsidiary planar face portions 40 (which can, if desired, be omitted), further downward movement of the shaft 2 causes the skewed face portion 38 to move past the cam rollers 42, and thus causes rotation of the shaft 2 until the planar surface portions 36 move into contact with the rollers 42. Further downward movement of the shaft 2 is purely axial, with no further rotation. In its return motion, achieved by the admission of compressed air into the chamber formed by the wall member 8, the shaft 2 is firstly moved vertically upwards without any rotation and is then caused to rotate to bring the operative member back into its out of the way position.

Figure 4 shows a cross sectional view of the alternative mechanism, which resembles the first illustrative mechanism except in the configuration of the cam section and the construction of the collar assembly.

In the alternative mechanism the shaft 110 (corresponding to the shaft 10) comprises a cam section 128 which has a cross section defined by two circular portions 132,132, two further circular portions 133,133, and four straight portions 134,134 in opposed parallel pairs, notionally forming a rhombus. These provide on the shaft 110, opposed cam faces comprising planar face portions, skewed face portions and subsidiary planar face portions, in a manner parallel to that described in relation to the first embodiment.

The alternative mechanism comprises a collar assembly 112 corresponding to the collar assembly and guide block of the first embodiment. Four sets of opposed cam rollers are mounted in the collar assembly 112; each set comprises a single cam roller 142 located in a recess in the collar assembly 112 and adapted to engage the cam faces on the shaft 110. Each of the rollers 142 is mounted on a lockable eccentric pin 144, so that the spacing between the axis of rotation of the roller 142 and the cam face can readily be adjusted.

It will readily be understood that the alternative mechanism operates in a manner strictly analogous to the first illustrative mechanism.

While in the two illustrative mechanisms the rollers 42,142 are described as mounted on eccentric pins 44, 144, greater ease of adjustment may be obtained by mounting the rollers on eccentric bushings which are themselves supported on cylindrical pins. The bushings may be adjusted and secured in position so that the distance between the axis of rotation of each of the rollers and the corresponding cam face may be adjusted.

## Claims

1. Moving mechanism for use in a glassware forming machine for moving an operative member between an out-of-the-way position and an operative position in alignment with the opening of a mould cavity, the operative member making a movement which has a rotary component about a vertical axis and a linear component in a vertical direction and the moving mechanism comprising a shaft (10,110) which extends vertically and on which a horizontally extending arm, on which the operative member is mounted, may be secured, a piston and cylinder assembly comprising a piston secured to the shaft and a vertically extending cylinder in which the piston is movable to impart a vertical component of movement to the shaft and thus to the operative member, and cam means for causing rotation of the shaft to provide a rotary component of movement to the operative member characterized in that
the cam means comprises a cam section (28,128) formed on the shaft (10,110) having a cross section having at least two opposed straight portions (34,134) which provide opposed cam faces on the shaft comprising planar face portions (36) and skewed face portions (38), a collar assembly (12,112) fixed relative to the cylinder (6) comprising opposed cam rollers (42,142), one arranged to engage each of the opposed cam faces on the shaft (10,110) at opposite sides of the shaft (10,110) whereby on axial movement of the shaft (10,110) to pass through the collar assembly (12, 112), the shaft (10,110) is forced to rotate as the skewed face portions (38,38) pass the cam rollers (42,142) and the shaft (10,110) is constrained to move axially without rotation as the planar face portions (36) pass the cam rollers (42,142).

2. Moving mechanism according to claim 1 characterized in that the cross section of the cam section (28) comprises two parallel opposed straight portions (34), and the collar assembly comprises two sets of opposed cam rollers (42).

3. Moving mechanism according to claim 2 characterized in that the cross section of the cam section (28) comprises two circular portions (32) joining the two opposed straight portions (34).

4. Moving mechanism according to claim 1 characterized in that the cross section of the cam section comprises four straight portions (134) in opposed parallel pairs, notionally forming a rhombus and the collar assembly (112) comprises four sets of cam rollers (142), one set engaging the cam face provided by each straight portion (134).

5. Moving mechanism according to claim 3 characterized in that the collar assembly (12) comprises a guide block (12) in which the cam rollers (42) are mounted and which comprises curved guide surfaces (50) which closely surround the circular portions (32) of the cross section of the cam section (28).

6. Moving mechanism according to one of claims 1, 2 and 3 characterized in that the collar assembly (12) comprises a guide block in which the cam rollers (42) are mounted, there being two cam rollers (42) in engagement with each of the opposed cam faces of the cam section said rollers (42) contacting said faces at least substantially up to outer side portions of said faces.

7. Moving mechanism according to any one of the preceding claims characterized in that the cam rollers (42,142) are mounted on pins (44,144) having eccentric portions secured in the guide block (12) so that the distance between the axis of rotation of each of the rollers (42) and the corresponding cam face may be adjusted.

8. Moving mechanism according to any one of claims 1 to 6 characterized in that the cam rollers (42) are mounted on eccentric bushings which are themselves supported on cylindrical pins which bushings may be secured in position so that the distance between the axis of rotation of each of the rollers and the corresponding cam face may be adjusted.
